# EUROPÄISCHE PATENTSCHRIFT

(11) **EP 2 813 135 B1**
(45) Veröffentlichungstag und Bekanntmachung des Hinweises auf die Patenterteilung: **09.05.2018**
(21) Anmeldenummer: 14171472.5
(22) Anmeldetag: 06.06.2014
(51) Int. Cl.: A01D 17/10, B65G 15/52

(54) **Stabband für Stabbandförderer landwirtschaftlicher Maschinen**
Rod belt for rod belt conveyors of agricultural machines
Bande transporteuse à barreaux pour convoyeur à bande à barreaux de machines agricoles

(30) Priorität: 12.06.2013 US 201313916277
(43) Veröffentlichungstag der Anmeldung: 17.12.2014
(73) Patentinhaber: Arnold Jäger Holding GmbH, 30625 Hannover (DE)
(72) Erfinder: Jäger, Sebastian, 30657 Hannover (DE); Mulder, Jan-Harm, 7751 DN Dalen (NL)
(74) Vertreter: Bremer, Ulrich

(56) Entgegenhaltungen:
- WO-A1-95/23497
- DE-A1- 2 715 108
- DE-A1- 3 737 066
- DE-U1-202007 015 687
- US-A1- 2008 202 405

## Beschreibung

Die vorliegende Erfindung betrifft ein Stabband für Stabbandförderer landwirtschaftlicher Maschinen gemäß dem Oberbegriff des Anspruchs 1.

Herkömmliche Stabbänder für Stabbandförderer landwirtschaftlicher Maschinen sind wie in der DE 195 20 927 A1 offenbart aufgebaut. Derartige Stabbänder weisen zwei oder mehrere parallel zueinander verlaufende, zugfeste elastische und endlose Gurte auf, die durch eine Vielzahl von quer zur Laufrichtung des Stabbandes und parallel zueinander angeordneten Stäben miteinander verbunden sind. Zur Festlegung der Stäbe an den Gurten besitzen die Stäbe abgeflachte und gelochte Auflagebereiche, mit denen sie auf den Gurten aufliegen. Die Verbindung der Auflagebereiche mit den Gurten erfolgt durch Niete oder ähnliche Befestigungsmittel, die den Auflagebereich und die Gurte durchsetzen.

Weitere Stabbänder für Stabbandförderer sind offenbart in DE 27 15 108 A1, WO 95/23497 A1, DE 20 2007 015687 U1 und DE 37 37 066 A1. Die Herstellung der Auflagebereiche erfolgt durch Schmieden, indem Rundstäbe an ihren Enden flach ausgeschlagen werden. Das erfolgt bei Temperaturen von 800 bis 900°C, bedarf also eines hohen Energieeinsatzes. Zudem ist für die Anschaffung von Schmiedepressen ein hoher Kapitaleinsatz erforderlich. Nach dem Schmieden ist des Weiteren eine Neuvergütung des Stabendes erforderlich, um die ursprünglichen Materialeigenschaften des Rundstabes, insbesondere die hohe Verschleißfestigkeit, wieder herzustellen. Darüber hinaus unterliegt das Schmieden der Stabenden verfahrensbedingt großen Toleranzen, was sich negativ auf die Bandgenauigkeit niederschlägt.

Ein gattungsgemäßes Stabband ist in der DE 200 11 436 U1 beschrieben. Bei diesem Stabband sind die Stäbe an ihren Enden nicht direkt mit den Gurten verbunden, sondern jeweils über ein Befestigungsstück. Die Befestigungsstücke sind durch Schmieden aus einem Vollstab hergestellt. Sie besitzen einen abgeflachten und gelochten Auflagebereich, der über eine Abkröpfung in einen Befestigungsbereich für die Stabenden übergeht. Der Befestigungsbereich ist durch eine zylindrische, sich in Längsrichtung der Stäbe erstreckende Hülse oder ein entsprechendes Sackloch gebildet. Die Stäbe bestehen aus Kunststoff und werden durch Verklemmen in den Hülsen festgelegt. Die Befestigungsstücke liegen mit ihren Auflagebereichen auf der Oberseite der Gurte auf und sind auf diesen durch Niete befestigt.

Aufgabe der vorliegenden Erfindung ist es, ein Stabband gattungsgemäßer Art zur Verfügung zu stellen, bei dem die Befestigungsstücke sehr einfach aufgebaut und damit auch einfach und kostengünstig herstellbar sind.

Diese Aufgabe wird erfindungsgemäß mit einem Stabband gelöst, welches die Merkmale des Anspruchs 1 aufweist.

Erfindungsgemäß sind die Befestigungsstücke als einfache Winkelstücke ausgeführt. In Einbaulage ist der Befestigungsbereich der Winkelstücke zur Gurtunterseite hin abgewinkelt. Dadurch ist es auf einfache Weise möglich, die Stäbe so mit den Befestigungsbereichen zu verbinden, dass die Längsachsen der Stäbe in der Ebene der neutralen Faser der Gurte angeordnet sind, wodurch die Beanspruchung der Gurte durch auf die Stäbe wirkende Momente und Kräfte verringert wird. Darüber hinaus ermöglicht die Ausführung der Befestigungsstücke als Winkelstücke, den Befestigungsbereich in Einbaulage in vorteilhafter Weise in einem geringen seitlichen Abstand von der Gurtinnenseite anzuordnen. Dadurch ist die Nutzbreite der Stäbe, die in der Ebene der neutralen Fasern der Gurte angeordnet ist, größer als bei durch Schmieden gekröpften Stabenden bzw. Befestigungsstücken. Die Stäbe sind über ihre gesamte Länge gerade, so dass sie mit einfachen Maschinen automatisch hergestellt werden können.

In vorteilhafter Ausgestaltung der Erfindung sind die Befestigungsstücke als Stanzbiegeteile oder Gussteile hergestellt. Diese können hoch präzise und automatisch hergestellt werden. Bei Verwendung derartig hergestellter Befestigungsstücke ist die Bandgenauigkeit fünf bis zehn Mal größer als bei geschmiedeten Stabenden bzw. Befestigungsstücken.

In einer weiteren vorteilhaften Ausführungsform der vorliegenden Erfindung ist der Befestigungsbereich der Befestigungsstücke als sich in Gurtlängsrichtung erstreckende Leiste ausgebildet, die in Abstand einer vorgesehenen Stabteilung mindestens zwei Befestigungsstellen für Stabenden aufweist. Durch diese Lösung kann bei gleich bleibender Teilung der Befestigungsstellen der Befestigungsstücke auf den Gurten die Stabteilung verringert werden. Das hat insbesondere auch Vorteile bei Gurten, die mit Nocken zum Zwangsantrieb der Stabbänder versehen sind, da die Teilung der Stäbe kleiner ausgeführt werden kann als die Teilung der Nocken.

Weitere vorteilhafte Ausgestaltungen der Erfindung ergeben sich aus den übrigen Unteransprüchen.

Die Erfindung wird nachstehend anhand von Ausführungsbeispielen näher erläutert. In der dazugehörigen Zeichnung zeigt:
- Fig. 1: einen perspektivischen Blick von schräg oben auf einen Seitenbereich eines Stabbandes gemäß einer ersten Ausführungsform der Erfindung,

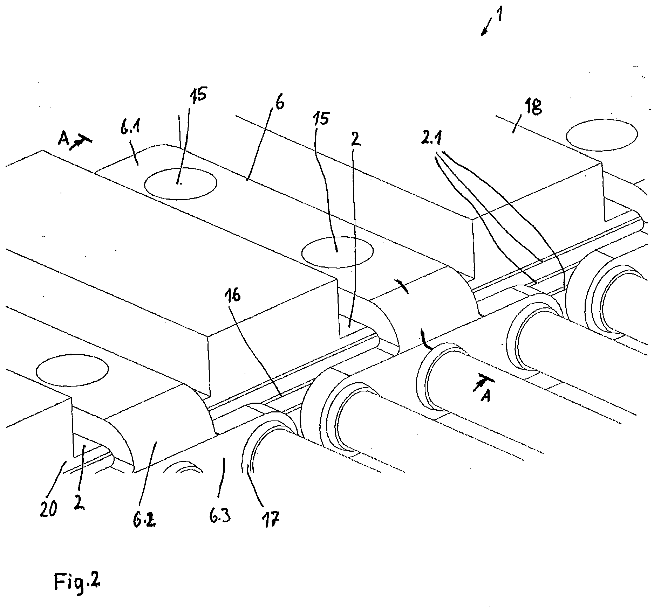

- Fig. 2: einen vergrößerten Ausschnitt der Darstellung gemäß Figur 1,
- Fig. 3: einen ersten Montageschritt bei der Herstellung eines Stabbandes gemäß der ersten Ausführungsform der Erfindung,
- Fig. 4: einen zweiten Montageschritt bei der Herstellung eines Stabbandes gemäß der ersten Ausführungsform der Erfindung,
- Fig. 5: eine Darstellung gemäß Figur 2 einer zweiten Ausführungsform der Erfindung,
- Fig. 6: eine Darstellung gemäß Figur 2 nach einer dritten Ausführungsform der Erfindung,
- Fig. 7: eine perspektivische Darstellung eines Befestigungsstücks gemäß einer vierten Ausführungsform der Erfindung,
- Fig. 8: ein Befestigungsstück gemäß Figur 7 mit modifiziertem Befestigungsloch,
- Fig. 9: ein Stabende gemäß einer weiteren Ausführungsform der vorliegenden Erfindung,
- Fig. 10: einen Schnitt A-A gemäß Fig.2,
- Fig.11: eine Darstellung gemäß Fig. 10 in einer zweiten Ausführungsform, und
- Fig. 12: eine Darstellung gemäß Fig. 10 in einer dritten Ausführungsform.

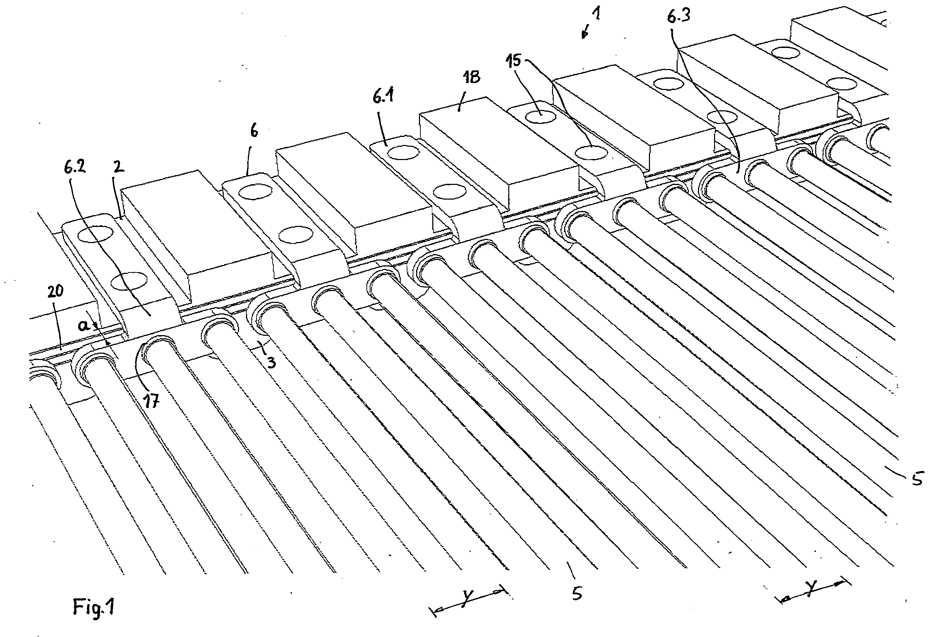

Das in Fig. 1 dargestellte Stabband 1 besteht aus zwei parallel zueinander angeordneten, umlaufenden Gurten 2. In der Zeichnung ist nur eine Seite des Stabbandes 1 dargestellt. Die andere Seite ist spiegelbildlich aufgebaut, so dass die nachfolgenden Ausführungen auch für diese Seite gelten.

Die Gurte sind in diesem Ausführungsbeispiel als Nockenriemen ausgeführt und können z. B. aus Gummi bestehen, der durch Gewebeeinlagen 2.1 verstärkt ist.

Auf der Unterseite der Gurte 2 sind Nocken 3 vorgesehen, die in einer Teilung x voneinander beabstandet sind. Diese Nocken 3 dienen dem Zwangsantrieb des Stabbandes 1. Dazu greifen nicht dargestellte Antriebsmittel von Antriebsrädern in die Lücken 4 zwischen den Nocken 3 ein. Derartige Ausführungen sind aus dem Stand der Technik bekannt und müssen daher nicht näher erläutert werden.

Der Abstand zwischen den Gurten 2 ist durch Stäbe 5 hergestellt, die quer zur Förderrichtung des Stabbandes 1 und parallel zueinander angeordnet und an ihren Enden über Befestigungsstücke 6 mit den Gurten 2 verbunden sind.

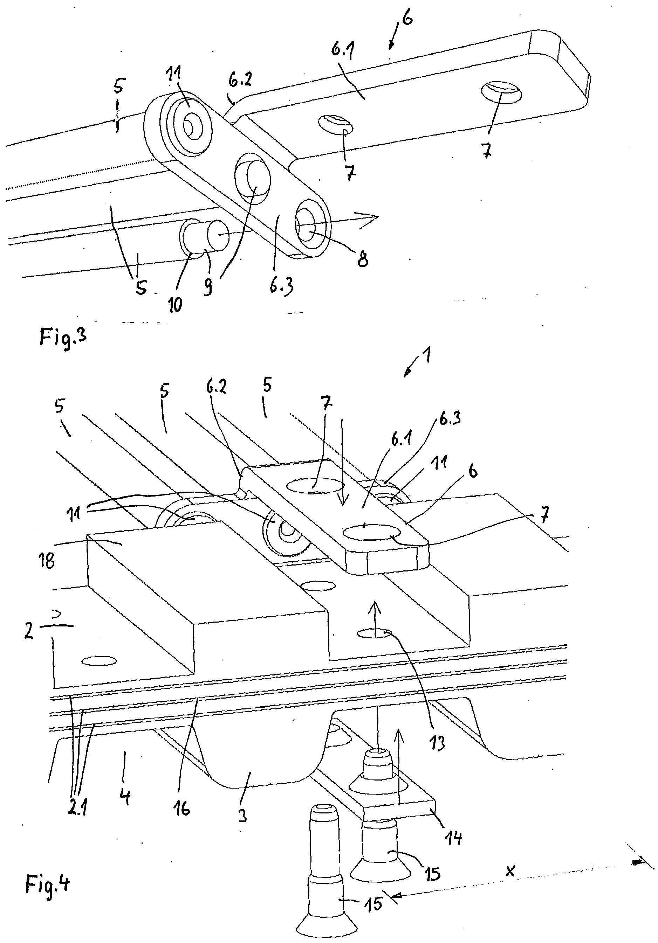

Die Befestigungsstücke 6 haben die einfache Form eines Winkelstücks und sind als hochgenaue, verschleißfeste, gehärtete Stanzbiegeteile hergestellt. Sie besitzen einen Auflagebereich 6.1, der zwei voneinander beabstandete Befestigungslöcher 7 aufweist. Dieser Auflagebereich 6.1 geht in einer 90°-Wölbung 6.2 in eine Leiste 6.3 über, die sich quer zum Auflagebereich 6.1 erstreckt und senkrecht zu diesem angeordnet ist. Die Leiste 6.3 besitzt drei Löcher 8, die in ihrer Längserstreckung in einer Teilung y voneinander beabstandet sind. Die Löcher 8 dienen der Befestigung der Stäbe 5 an den Befestigungsstücken 6. Dazu sind die Stäbe 5 an ihren Enden mit einem zentrischen Zapfen 9 versehen (Fig. 3), der durch Abdrehen hergestellt werden kann. Zwischen dem Zapfen 9 und dem restlichen Stabkörper besteht ein Absatz 10. Zur Herstellung der Verbindung zwischen den Stäben 5 und den Befestigungsstücken 6 werden die Zapfen 9 durch die Löcher 8 der Leiste 6.3 gesteckt und dann durch Herstellung einer Nietverbindung 11 verdrehsicher an der Leiste 6.3 festgelegt. Da der Absatz 10 der Nietverbindung 11 gegenüberliegend an der Leiste 6.3 anliegt, sind die Stäbe 5 auch axial an den Befestigungsstücken 6 festgelegt. Die Herstellung der Nietverbindung 11 zwischen den Stäben 5 und dem Befestigungsstück 6 sind in aufeinanderfolgenden Stadien in Fig. 3 dargestellt.

Nachdem die Stäbe 5, wie oben dargelegt, mit den Befestigungsstücken 6 verbunden sind, werden diese mit der Unterseite ihrer Auflagebereiche 6.1 auf die Gurte 2 aufgelegt, so dass die Löcher 7 des Auflagebereichs 6.1 mit Löchern 13, die in den Gurten 2 vorgesehen sind, fluchten. Anschließend werden von unten unter Zwischenschaltung einer Nietplatte 14 Niete 15 durch die Löcher 13 und 7 hindurch gesteckt und eine Nietverbindung zwischen den Befestigungsstücken 6 und den Gurten 2 hergestellt. Das ist in Fig. 4 dargestellt.

In Einbaulage des Befestigungsstückes 6 verläuft deren Leiste 6.3 in einem geringen seitlichen Abstand a (Fig.1) von der Gurtinnenseite 20 und parallel zu dieser. Die Längsachsen 21 der Stäbe 5 liegen dabei in der Ebene der neutralen Fasern 16 der Gurte 2. Der seitliche Abstand a liegt bei 0,1 bis 10 mm.

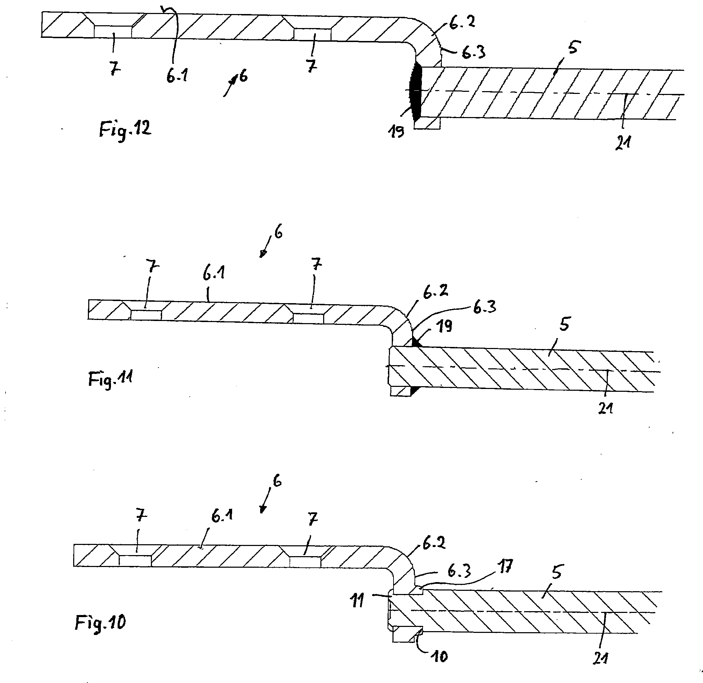

Fig. 10 zeigt einen Schnitt durch eine Verbindungsstelle zwischen den Stäben 5 und den Befestigungsstücken 6. Aus dieser Darstellung ist gut zu erkennen, dass die Leiste 6.3 das Befestigungsstück 6 zwischen der Nietverbindung 11 und dem Absatz 10 axial gekammert ist. Desweiteren ist aus dieser Abbildung zu erkennen, dass die Löcher 8 der Leiste 6.3 mit einem Durchzug 17 versehen sind, wodurch die Verbindung zwischen den Stäben 5 und den Befestigungsstücken 6 stabilisiert wird.

Da die Auflagebereiche 6.1 der Befestigungsstücke 6 in Laufrichtung der Gurte 2 gesehen nur eine schmale Erstreckung haben, können auf der Oberseite der Gurte 2 diametral gegenüberliegend den Nocken 3 weitere Nocken 18 vorgesehen werden. Diese Nocken 18 dienen dem Schutz der auf den Gurten befestigten Auflagebereiche 6.1 der Befestigungsstücke 6.

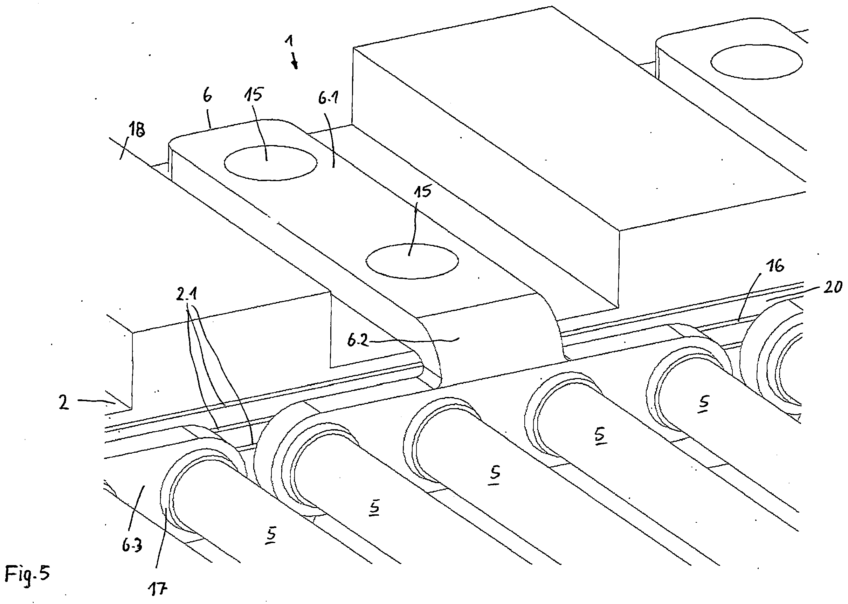

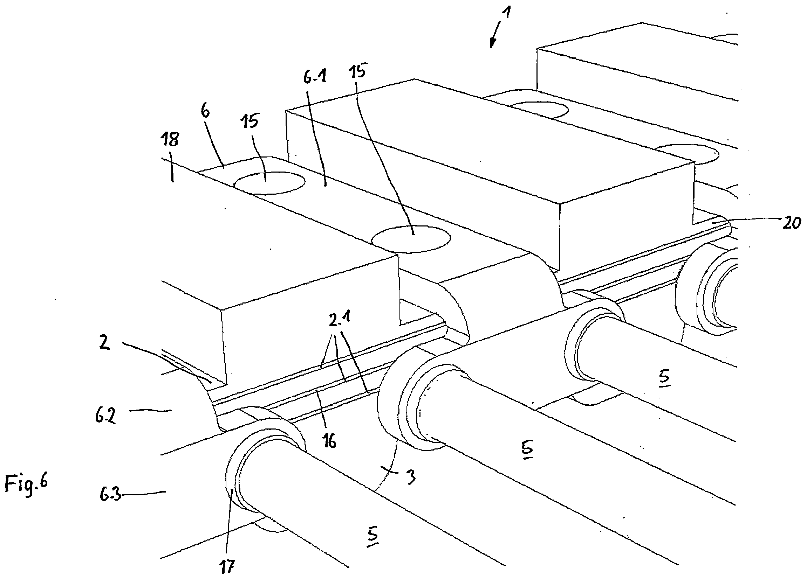

Die Ausführungsbeispiele gemäß den Fig. 5 und 6 unterscheiden sich von dem vorstehenden Ausführungsbeispiel lediglich dadurch, dass jeweils vier Stäbe 5 (Fig. 5) bzw. zwei Stäbe 5 (Fig. 6) an die Leiste 6.3 des Befestigungsstückes 6 eingebunden sind.

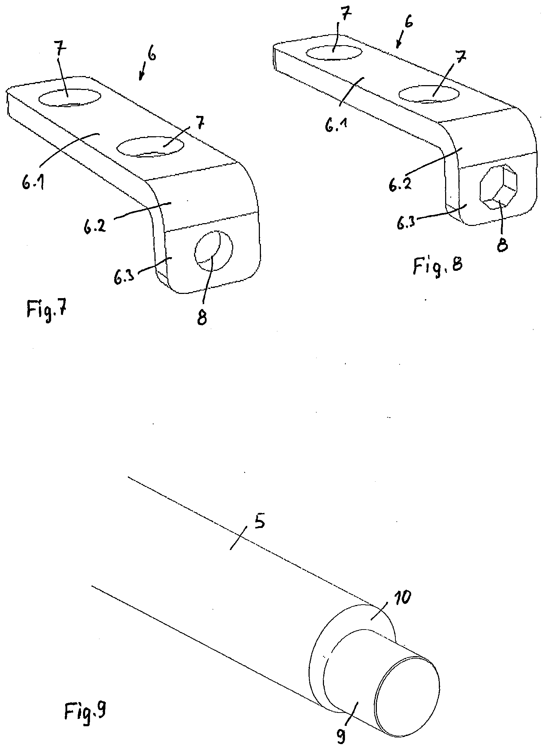

Fig. 7 zeigt eine weitere Ausführungsform eines Befestigungsstückes 6. Dieses Befestigungsstück 6 ist für die Einbindung nur eines Stabes 5 vorgesehen. In der Leiste 6.3 ist dafür ein Loch 8 vorgesehen, das hier allerdings keinen Durchzug aufweist.

Fig. 8 zeigt ebenfalls ein Befestigungsstück 6 für die Einbindung eines Stabes 5. Der einzige Unterschied zu dem Befestigungsstück 6 gemäß Fig. 7 besteht darin, dass das Loch 8 unrund ausgeführt ist, wodurch eine zusätzliche Sicherung gegen Verdrehen des Stabes 5 in Loch 8 erreicht ist.

Fig. 9 zeigt ein Stabende mit einem exzentrischen Zapfen 9. Aufgrund der Exzentrizität des Zapfens 9 gegenüber der Stabachse 21 kann der Stab 5 in dem Loch 8 des Befestigungsstücks 6 vor dem endgültigen Befestigen durch z. B. Nieten oder Schweißen durch Verdrehen in seiner Lage verändert werden.

Die Fig. 11 und 12 zeigen Ausführungsbeispiele, bei denen die Verbindung zwischen den Stäben 5 und den Befestigungsstücken 6 durch Schweißungen 19 erfolgt.

## Patentansprüche

1. Stabband (1) für Stabbandförderer landwirtschaftlicher Maschinen mit quer zur Laufrichtung und parallel zueinander angeordneten Stäben (5), die an ihren Enden jeweils mit einem Befestigungsstück (6) verbunden sind, welches einen abgeflachten und gelochten Auflagebereich (6.1) aufweist, mit dem es auf parallel zueinander verlaufenden, zugfesten und elastischen endlosen Gurten (2) aufliegt und durch Niete (9) oder ähnliche Befestigungsmittel, die den Auflagebereich und die Gurte durchsetzen, verbunden ist, wobei der Auflagebereich einstückig mit einem Befestigungsbereich (6.3) für die Stabenden ausgebildet ist, **dadurch gekennzeichnet, dass** die Befestigungsstücke (6) als Winkelstücke ausgeführt sind, mit einem, bezogen auf die Einbaulage, aus der Ebene des Auflagebereichs (6.1) zur Gurtunterseite hin abgewinkelten und parallel zu der Gurtinnenseite (20) angeordneten Befestigungsbereich (6.3).

2. Stabband nach Anspruch 1, **dadurch gekennzeichnet, dass** die Befestigungsstücke (6) als Stanzbiegeteile oder Gussteile hergestellt sind.

3. Stabband nach Anspruch 1 oder 2, **dadurch gekennzeichnet, dass** der Befestigungsbereich (6.3) in Einbaulage einen geringen seitlichen Abstand (a) von der Gurtinnenseite (20) hat.

4. Stabband nach einem der Ansprüche 1 bis 3, **dadurch gekennzeichnet, dass** der Befestigungsbereich (6.3) ein Loch (8) zur Aufnahme eines Stabendes aufweist, in welchem das Stabende verdrehsicher und axial unverschieblich festgelegt ist.

5. Stabband nach Anspruch 4, **dadurch gekennzeichnet, dass** das Loch (8) mit einem Durchzug (17) versehen ist.

6. Stabband nach einem der Ansprüche 1 bis 3, **dadurch gekennzeichnet, dass** der Befestigungsbereich als Leiste (6.3) ausgebildet ist, die im Abstand einer vorgesehenen Stabteilung (y) mindestens zwei Befestigungstellen für die Stabenden aufweist.

7. Stabband nach Anspruch 6, **dadurch gekennzeichnet, dass** die Befestigungsstellen Löcher (8) zur Aufnahme der Stabenden sind, in welchen die Stabenden verdrehsicher und axial unverschieblich festgelegt sind.

8. Stabband nach Anspruch 7, **dadurch gekennzeichnet, dass** die Löcher (8) mit einem Durchzug (17) versehen sind.

9. Stabband nach einem der Ansprüche 6 bis 8, **dadurch gekennzeichnet, dass** die Gurte (2) mit Nocken (3) zum Zwangsantrieb versehen sind und die Teilung (x) der Nocken (3) größer als die Teilung (y) der Stäbe (5) ist.

10. Stabband nach einem der Ansprüche 7 bis 9, **dadurch gekennzeichnet, dass** die Stabenden als Zapfen (9) ausgebildet sind, deren Querschnitt an den Querschnitt der Löcher (8) des Befestigungsbereiches angepasst und geringer ist als der Querschnitt der Stäbe (5) in deren übrigen Bereich.

11. Stabband nach Anspruch 10, **dadurch gekennzeichnet, dass** die Zapfen (9) einen runden Querschnitt aufweisen.

12. Stabband nach Anspruch 11, **dadurch gekennzeichnet, dass** die Zapfen (9) exzentrisch zur Längsachse (21) der Stäbe (5) angeordnet sind.

## Claims

1. Rod belt (1) for rod belt conveyors of agricultural machines with rods (5) arranged transverse to the rotation direction and parallel to each other, which rods are attached to a bracket at their respective ends (6), which bracket consists of a flattened and perforated support area (6.1), which support area is attached to parallel-running continuous belts (2) with a high-tensile strength and elasticity and this support area is attached thereon by studs (9) or other fixings, which pass through both the support area and the belts, wherein the support area is constructed in one piece and has an attachment area (6.3) for the rod ends, **characterised in that** the brackets (6) are constructed as angle pieces, and consist of an attachment area (6.3), which is installed in a position perpendicular to the belt underside and the support area (6.1) and parallel to the belt interior side (20).

2. Rod belt according to claim 1, **characterised in that** the brackets (6) are constructed as stamped bent parts or castings.

3. Rod belt according to claim 1 or 2, **characterised in that** the attachment area (6.3) is mounted in a position with a minimal lateral distance (a) from the belt interior side (20).

4. Rod belt according to any one of claims 1 to 3, **characterised in that** the fixing area (6.3) exhibits a perforation (8) for the admission of a rod end, in which the rod end is fixed against rotation and is axially immovable.

5. Rod belt according to claim 4, **characterised in that** the perforation (8) is provided with an eyelet (17).

6. Rod belt according to any one of claims 1 to 3, **characterised in that** the attachment area is designed as a strip (6.3), which has at least two attachment points for the rod ends within a designated space (y).

7. Rod belt according to claim 6, **characterised in that** the attachment points are perforations (8) for accommodating the rod ends, in which the rod ends are fixed against rotation and are axially immovable.

8. Rod belt according to claim 7, **characterised in that** the perforations (8) are provided with an eyelet (17).

9. Rod belt according to any one of claims 6 to 8, **characterised in that** the belts (2) are provided with cam lobes (3) for positive drive and the spacing (x) of the cam lobes (3) is larger than the spacing (y) of the rods (5).

10. Rod belt according to any one of claims 7 to 9, **characterised in that** the rod ends take the form of pegs (9), the cross-section of which conforms to the cross-section of the perforations (8) in the attachment area and is smaller than the cross-section of the remaining portion of the rod (5).

11. Rod belt according to claim 10, **characterised in that** the pegs (9) have a circular cross-section.

12. Rod belt according to claim 11, **characterised in that** the pegs (9) are arranged eccentrically to the longitudinal axis (21) of the rods (5).

## Revendications

1. Bande à barreaux (1) pour des convoyeurs à bande à barreaux de machines agricoles avec des barreaux (5) disposés transversalement à la direction d'avancement et parallèlement les uns par rapport aux autres, barreaux qui sont reliés à leurs extrémités par un élément de fixation (6) respectivement, qui présente une zone d'appui (6.1) aplatie et perforée, par l'intermédiaire de laquelle il repose sur des courroies (2) sans fin élastiques et résistantes à la traction qui s'étendent parallèlement l'une à l'autre, courroies, auxquelles il est relié par des rivets (9) ou des moyens de fixation similaires qui transpercent la zone d'appui et les courroies, la zone d'appui étant réalisée d'une seule pièce avec la zone de fixation (6.3) pour les extrémités de barreaux, **caractérisée en ce que** les éléments de fixation (6) sont réalisés sous forme de pièces angulaires avec une zone de fixation, qui est coudée, par rapport à la position de montage, à partir du plan de la zone d'appui (6.1) vers la face inférieure de courroie et disposée parallèle à la face interne de courroie (20).

2. Bande à barreaux suivant la revendication 1, **caractérisée en ce que** les éléments de fixation (6) sont fabriqués sous forme de pièces découpées et pliées ou de pièces moulées.

3. Bande à barreaux suivant la revendication 1 ou 2, **caractérisée en ce que** la zone de fixation (6.3) présente, en position de montage, un faible écart latéral (a) par rapport à la face interne de courroie (20).

4. Bande à barreaux suivant une des revendications 1 à 3, **caractérisée en ce que** la zone de fixation (6.3) présente un trou (8) adapté à recevoir une extrémité de barreau, trou, dans lequel l'extrémité de barreau est bloquée en rotation et non déplaçable axialement.

5. Bande à barreaux suivant la revendication 4, **caractérisée en ce que** le trou (8) est pourvu d'un passage (17).

6. Bande à barreaux suivant une des revendications 1 à 3, **caractérisée en ce que** la zone de fixation est conçue sous forme de barrette (6.3) qui présente, avec l'écart d'une division des barreaux prévue (y), au moins deux emplacements de fixation pour des extrémités de barreaux.

7. Bande à barreaux suivant la revendication 6, **caractérisée en ce que** les emplacements de fixation sont des trous (8) destinés à recevoir les extrémités de barreaux, trous, dans lesquels les extrémités de barreaux sont bloquées en rotation et non déplaçables axialement.

8. Bande à barreaux suivant la revendication 7, **caractérisée en ce que** les trous (8) sont pourvus d'un passage (17).

9. Bande à barreaux suivant une des revendications 6 à 8, **caractérisée en ce que** les courrois (2) sont pourvus de saillies (3) pour un entraînement forcé et la division (x) des saillies (3) est plus grande que la division (y) des barreaux (5).

10. Bande à barreaux suivant une des revendications 7 à 9, **caractérisée en ce que** les extrémités des barreaux sont conçues sous forme de tenons (9), dont la section transversale est adaptée à la section transversale des trous (8) de la zone de fixation et plus petite que la section transversale des barreaux (5) au niveau de leur zone restante.

11. Bande à barreaux suivant la revendication 10, **caractérisée en ce que** les tenons (9) présentent une section transversale ronde.

12. Bande à barreaux suivant la revendication 11, **caractérisée en ce que** les tenons (9) sont excentrés par rapport à l'axe longitudinal (21) des barreaux (5).
